# EUROPÄISCHE PATENTSCHRIFT

(11) **EP 3 423 797 B1**
(45) Veröffentlichungstag und Bekanntmachung des Hinweises auf die Patenterteilung: **31.08.2022**
(21) Anmeldenummer: 17709614.6
(22) Anmeldetag: 01.03.2017
(51) Int. Cl.: G01J 1/44, G01J 3/44, G01J 1/02, G01J 1/46

(54) **LICHT-/SPANNUNGS-WANDLERSCHALTUNG ZUR WANDLUNG VON INTENSITÄTSSCHWANKUNGEN VON LICHT IN EIN WECHSELSPANNUNGSMESSIGNAL**
LIGHT/VOLTAGE CONVERTER CIRCUIT FOR CONVERTING INTENSITY FLUCTUATIONS OF LIGHT INTO AN ALTERNATING VOLTAGE MEASUREMENT SIGNAL
CIRCUIT DE CONVERSION LUMIÈRE/TENSION POUR CONVERTIR DES VARIATIONS D'INTENSITÉ DE LUMIÈRE EN UN SIGNAL DE MESURE DE TENSION ALTERNATIVE

(30) Priorität: 02.03.2016 LU 92983
(43) Veröffentlichungstag der Anmeldung: 09.01.2019
(73) Patentinhaber: Leica Microsystems CMS GmbH, 35578 Wetzlar (DE)
(72) Erfinder: KRISHNAMACHARI, Vishnu Vardhan, 64342 Seeheim-Jugenheim (DE); MRAWEK, Patric, 67454 Hassloch (DE); WIDZGOWSKI, Bernd, 69221 Dossenheim (DE)
(74) Vertreter: DehnsGermany Partnerschaft von Patentanwälten
(86) Internationale Anmeldenummer: PCT/EP2017/054750
(87) Internationale Veröffentlichungsnummer: WO 2017/149004

(56) Entgegenhaltungen:
- EP-A2- 1 164 800
- US-A- 5 448 161
- US-A1- 2008 265 133

## Beschreibung

Die vorliegende Erfindung betrifft eine Licht-/Spannungs-Wandlerschaltung zur Wandlung von hochfrequenten Intensitätsschwankungen von Licht in ein Wechselspannungmesssignal sowie ein Mikroskop mit einer solchen Licht-/Spannungs-Wandlerschaltung.

### Stand der Technik

Auf dem Gebiet der Mikroskopie sind spektroskopische Untersuchungsmethoden verbreitet, die sich ein oder mehrerer Laserquellen bedienen, um Proben zu beleuchten. Je nach Art der Messung stellen sich dabei sehr unterschiedliche Anforderungen an die Messtechnik.

Beispielsweise werden bei der SRS-Mikroskopie (SRS: stimulated Raman scattering; siehe beispielsweise Freudiger et al., Label-Free Biomedical Imaging with High Sensitivity by Stimulated Raman Scattering Microscopy, Science 2008) zwei Laserstrahlen unterschiedlicher Wellenlänge eingesetzt. Beide Laserstrahlen werden auf die zu untersuchende Probe geführt und an ihr gestreut. Bei Amplitudenmodulation (alternativ beispielsweise auch Polarisationsmodulation, Wellenlängenmodulation) eines der beiden Laserstrahlen ergibt sich als Nutzsignal eine geringe Intensitätsschwankung im gestreuten Licht (kohärenter laserähnlicher Strahl), die jedoch auf einem signifikanten Gleichanteil aufsitzt. Die Erfassung dieser gleichanteilbehafteten Intensitätsschwankung (Wechselanteil) bereitet Schwierigkeiten.

Zum einen kann das Verhältnis von Gleich- zu Wechselanteil bis zu 10exp6 betragen. Zum anderen kann der Gleichanteil des Lichtes in der Größenordnung eines Watts liegen, was zu einem erheblichen Energieeintrag in das Detektorelement (üblicherweise eine Photodiode) führt. Neben der Erwärmung durch die eingestrahlte Lichtleistung führt der Gleichanteil auch zu einem Stromfluss in der Diode (diese besitzt üblicherweise eine Vorspannung in Sperrrichtung), was ebenfalls zu einer signifikanten Erwärmung beiträgt. Diese wirkt sich insbesondere durch eine Verschiebung des Arbeitspunktes und Vergrößerung des Eigenrauschens negativ auf Messung aus.

Die Messung wird üblicherweise scannend ausgeführt, d.h. punktuell über die Probe gerastert. Dies erfolgt üblicherweise zeilenweise, wobei während des Zeilensprungs die Laser abgeschaltet werden, was zu einem zusätzlichen Falschsignal beim Wiedereinschalten führen kann.

In der US 2008/265133 A1 wird ein Schaltnetzteil mit Optokoppler und galvanischer Trennung über einen Transformator beschrieben. Eine Photodiode nimmt das optische Signal auf und betreibt damit nach Verstärkung einen Pulsweitenmodulator. US 5 448 161 A beschreibt eine Photodiodenschaltung zur Blitzerkennung, bei der die Photodiode mit einem Transformator gekoppelt ist.

Offenbarung der Erfindung Erfindungsgemäß werden eine Licht-/Spannungs-Wandlerschaltung zur Erfassung von hochfrequenten Intensitätsschwankungen von Licht sowie ein Mikroskop, z.B. ein SRS-Mikroskop, mit einer solchen Licht-/Spannungs-Wandlerschaltung mit den Merkmalen der unabhängigen Patentansprüche vorgeschlagen. Vorteilhafte Ausgestaltungen sind Gegenstand der Unteransprüche sowie der nachfolgenden Beschreibung.

Ein Aspekt der Erfindung betrifft eine Licht-/Spannungs-Wandlerschaltung zur Wandlung von hochfrequenten Intensitätsschwankungen von Licht in ein Wechselspannungmesssignal mit einer Photodiode als Detektorelement, wobei der Wechselanteil in der detektierten Lichtintensität mittels eines Transformators mit einer Primärwicklung und einer Sekundärwicklung vom Gleichanteil getrennt wird. Dazu wird der Lichtstrom der Photodiode durch die Primärwicklung geführt, so dass der Wechselanteil eine Wechselspannung in der Sekundärwicklung induziert, die als Messsignal erfasst werden kann. Parallel zu der Reihenschaltung aus der Primärwicklung des Transformators und der Photodiode ist ein gleichstromsperrendes und wechselstromleitendes elektrischen Netzwerk geschaltet, welches den Stromkreis der Photodiode für Wechselspannung schließt und so Signalverluste in weiteren angeschlossenen Komponenten, insbesondere einer Spannungsquelle für die Photodiode, verhindert. Das Netzwerk kann überdies die Impedanz der Spannungsquelle derart anpassen, dass der Frequenzbereich des Lichtstromes, der detektiert werden soll, eine größtmögliche Induktion im Transformator hervorruft. Das Netzwerk kann auch frequenzselektiv ausgelegt werden, um eine Filterfunktion bezüglich des zu detektierenden Signals zu erreichen.

Durch die Erfindung wird das Nutzsignal vom Gleichanteil sehr gut getrennt und für eine weitere Auswertung, z.B. Aufbereitung, Verstärkung usw., zugänglich gemacht. Gleichanteilbehaftete Intensitätsschwankung können so besonders gut und genau gemessen werden. Darüber hinaus zeichnet sich die Licht-/Spannungs-Wandlerschaltung durch einen einfachen Aufbau mit unkomplizierten Bauteilen und die damit einhergehende Robustheit und Zuverlässigkeit aus. Durch den Transformator wird ein potentialfreies Messsignal bereitgestellt, was die weitere Verarbeitung sehr flexibel macht. Ein Falschsignalanteil beim Einschalten, z.B. beim Zeilensprung, wird ebenfalls reduziert oder ganz vermieden.

Eine Aufbereitung des in die Sekundärwicklung induzierten Signals ist möglich, wenn ein zweites elektrisches Netzwerk elektrisch leitend mit der Sekundärwicklung des Transformators verbunden ist. Die Aufbereitung kann eine Filterung und/oder Verstärkung beinhalten. Das zweite elektrische Netzwerk kann insbesondere auch zur Impedanzanpassung der Spannungsmesseinrichtung an die restliche Licht-/Spannungs-Wandlerschaltung dienen, so dass ein besonders großes Messsignal erhalten wird.

Insbesondere wird in die Sekundärwicklung ein Strom induziert. Damit dieser Strom als Spannung messbar wird, kann er mit Hilfe eines Strom-Spannungs-Wandlers in eine Spannung konvertiert werden. Die einfachste Form eines solchen Wandlers ist eine Impedanz. In bevorzugter Ausgestaltung wird die Eingangsimpedanz des zweiten elektrischen Netzwerks zur Strom-Spannungs-Wandlung genutzt. Am Ausgang des zweiten elektrischen Netzwerks kann beispielsweise ein Spannungsverstärker eingesetzt werden.

Eine besonders einfache Messung des Wechselspannungmesssignals ist möglich, wenn eine Spannungsmesseinrichtung parallel zu der Sekundärwicklung des Transformators geschaltet ist.

Erfindungsgemäss ist eine Spannungsquelle parallel zu der Reihenschaltung aus der Primärwicklung des Transformators und der Photodiode geschaltet. Damit kann die Photodiode in Sperrrichtung betrieben werden, was die Bandbreite des detektierbaren Lichtstroms erhöht.

Vorzugsweise liegt eine Elektrode der Photodiode elektrisch auf Masse. Dies bietet den Vorteil, dass über die Masseverbindung gleichzeitig eine Wärmeableitung stattfinden kann, insbesondere, wenn hierfür eine ausreichend massive elektrische Verbindung (z.B. Leitung o.ä.) verwendet wird. Beispielsweise kann diese Elektrode auch physisch mit einem (insbesondere massiven) metallischen Körper verbunden werden, welcher insbesondere gleichzeitig als Wärmesenke und zur Abschirmung elektrischer Felder dienen kann, ohne dass besonders aufwändige Isolierungen notwendig wären. Eine besonders gute Abschirmungswirkung wird erreicht, wenn der Körper eine hohe elektrische Leitfähigkeit aufweist. Eine besonders gute Kühlwirkung wird erreicht, wenn die Ruhemasse des Körpers wenigstens das 10fache, 20fache, 50fache oder 100fache der Masse der Photodiode beträgt.

Vorzugsweise weist der Körper eine Ausnehmung auf, in welcher die Photodiode angeordnet ist. Damit kann eine besonders gute Kühl- und Abschirmungswirkung erzielt werden. Die Photodiode kann aber auch an einem Körper ohne Ausnehmung befestigt sein. Dies erleichtert die Herstellung.

Eine Befestigung der Photodiode an dem metallischen Körper kann beispielweise durch Löten erreicht werden. Dies ist ein in der Praxis vielfach erprobtes Befestigungsverfahren mit gleichzeitig elektrischer Kontaktierung..

Der Körper kann beispielsweise als Platte oder Block ausgebildet sein.

Der Körper kann beispielsweise ganz oder teilweise aus Kupfer und/oder Aluminium und/oder Eisen ausgebildet sein. Er kann zum Korrosionsschutz z.B. verzinnt, verzinkt oder vernickelt sein.

Weitere Vorteile und Ausgestaltungen der Erfindung ergeben sich aus der Beschreibung und der beiliegenden Zeichnung.

Die Erfindung ist anhand eines Ausführungsbeispieles in der Zeichnung schematisch dargestellt und wird im Folgenden unter Bezugnahme auf die Zeichnung beschrieben.

### Figurenbeschreibung

Figur 1 zeigt eine bevorzugte Ausführungsform eines als SRS-Mikroskop ausgebildeten erfindungsgemäßen Mikroskops.
Figur 2 zeigt eine schematische Schaltplanansicht einer bevorzugte Ausführungsform einer erfindungsgemäßen Licht-/Spannungs-Wandlerschaltung.
Figur 3 zeigt Figur 2 mit einem zusätzlichen metallischen Körper für die Photodiode.
Figur 4a zeigt eine erste bevorzugte Möglichkeit für die Verbindung der Photodiode einer erfindungsgemäßen Licht-/Spannungs-Wandlerschaltung mit Masse.
Figur 4b zeigt eine zweite bevorzugte Möglichkeit für die Verbindung der Photodiode einer erfindungsgemäßen Licht-/Spannungs-Wandlerschaltung mit Masse.

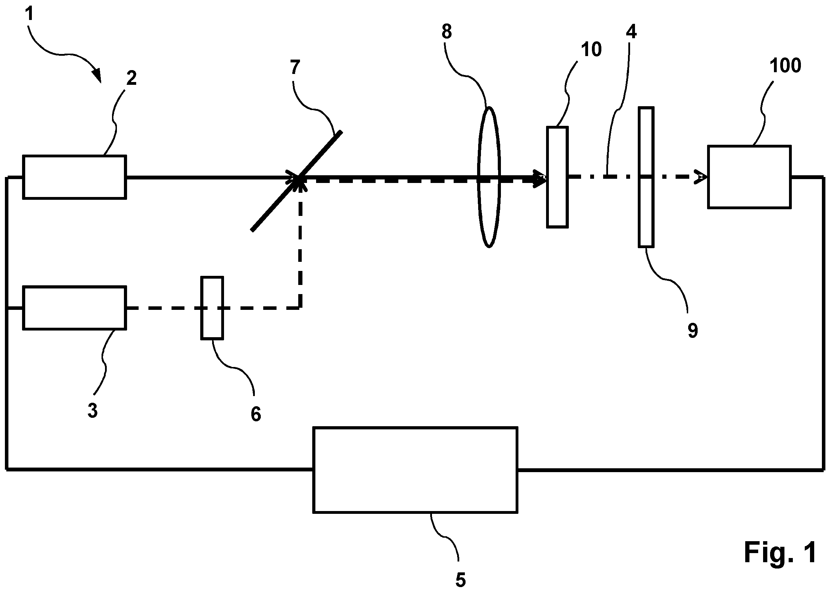

In Figur 1 ist eine bevorzugte Ausführungsform eines erfindungsgemäßen Mikroskops grob schematisch dargestellt und insgesamt mit 1 bezeichnet. Das Mikroskop basiert auf dem Prinzip der SRS-Mikroskopie, wobei eine Probe 10 mittels zweier Laser 2, 3 unterschiedlicher Wellenlängen *λ*_{P} (Laser 2) und *λ*_{S} (Laser 3) punktuell bestrahlt wird. Hierzu durchläuft der vom Laser 3 (Stokes-Laser) emittierte sogenannte Stokes-Strahl mit der Wellenlänge *λ*_{S} einen Amplitudenmodulator 6 zur Modulation der Intensität des Stokes-Strahls (alternativ: Vorrichtung zur Wellenlängen- oder Polarisationsmodulation) im hohen Frequenzbereich (typischerweise MHz) und wird mit dem vom Laser 2 (Pump-Laser) ausgesendeten sogenannten Pump-Strahl mit der Wellenlänge *λ*_{P} über einen dichroitischen Spiegel 7 vereinigt. Anschließend durchlaufen die Strahlen das Mikroksopobjektiv 8, von dem sie auf denselben Probenbereich der Probe 10 fokussiert werden. Ein resultierender gestreuter Lichtstrahl 4 (bestehend aus den gegebenenfalls in ihrer Intensität auf Grund des SRS-Effektes veränderten Pump- und Stokes-Strahlen) durchläuft zuerst einen Filter 9 zum Blockieren des Stokes-Anteils des Lichtstrahls 4 und wird anschließend von einem Detektor, der eine bevorzugte Ausführungsform einer erfindungsgemäßen Licht-/Spannungs-Wandlerschaltung 100 aufweist, detektiert. Eine Recheneinheit 5 dient zur Steuerung der Komponenten des Mikroskops 1 sowie vorzugsweise zur Aufnahme und Verarbeitung des von der Licht-/Spannungs-Wandlerschaltung 100 gelieferten Wechselspannungmesssignals.

Die Modulierung des Stokes-Strahls führt zu einer Intensitätsschwankung im gestreuten Pump-Strahl. Es ergibt sich im resultierenden Lichtstrahl 4 nach dem Filter 9 bezogen auf die Intensität des Lichtstrahls ein hoher Gleichanteil, der mit einem kleinen Wechselanteil überlagert ist.

Die Messung wird üblicherweise scannend ausgeführt, d.h. punktuell über die Probe gerastert. Dies erfolgt üblicherweise zeilenweise, wobei während des Zeilensprungs die Laser abgeschaltet werden können.

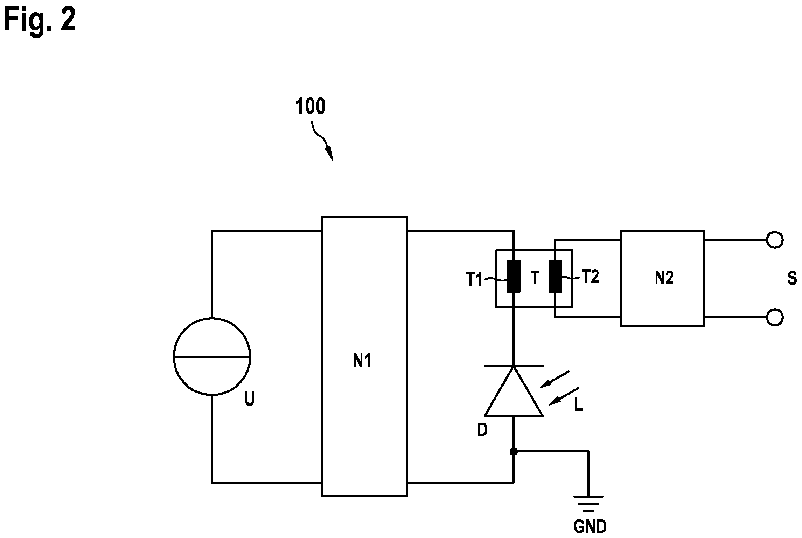

In Figur 2 ist eine bevorzugte Ausführungsform einer erfindungsgemäßen Licht-/Spannungs-Wandlerschaltung 100 schematisch und schaltplanartig dargestellt. Die Licht-/Spannungs-Wandlerschaltung 100 dient zur Wandlung der anhand von Figur 1 beschriebenen Intensitätsschwankungen im Lichtstrahl 4, welcher in Figur 2 durch die Pfeile L angedeutet ist, in ein Wechselspannungmesssignal.

Die Licht-/Spannungs-Wandlerschaltung 100 weist eine Photodiode D auf, die mit einer Primärwicklung T1 eines Transformators T in Reihe geschaltet ist. Ein gleichstromsperrendes und wechselstromleitendes elektrisches Netzwerk N1 ist parallel zu der Reihenschaltung aus der Primärwicklung T1 des Transformators T und der Photodiode D geschaltet. Weiterhin ist eine Spannungsquelle U parallel zu der Reihenschaltung aus der Primärwicklung T1 des Transformators T und der Photodiode D geschaltet.

Mittels der Spannungsquelle U kann die Photodiode D in Sperrrichtung betrieben werden, sodass von der Photodiode D ein Lichtstrom mit besonders großer Bandbreite erzeugbar ist.

Das gleichstromsperrende und wechselstromleitende elektrische Netzwerk N1 dient zum einen zum Schließen des Wechselstromkreises durch die Photodiode D und die Primärwicklung T1 des Transformators T, sodass der interessierende Wechselstromanteil nicht über die Spannungsquelle U fließen muss, was zu Verfälschungen bzw. Störungen führen würde. Weiterhin kann das Netzwerk N1 die Impedanz des geschlossenen Wechselstromkreises so anpassen, dass der Wechselanteil eine größtmögliche Induktion im Transformator T hervorruft. Der Betrag der Impedanz wird für die Frequenz des Wechselanteils hierbei minimiert.

Das Netzwerk N1 kann im einfachsten Fall aus einem einzelnen Kondensator bestehen. Zusätzlich kann das Netzwerk weitere L-, R-, C-Elemente (Induktivitäten, Widerstände, Kapazitäten) aufweisen, die die Impedanz des Schwingkreises bei der Frequenz des interessierenden Wechselstromanteils reduzieren.

Im Transformator T wird der Wechselanteil des Stroms von der Primärwicklung T1 in eine Sekundärwicklung T2 induziert, sodass sekundärseitig lediglich der Wechselanteil getrennt vom Gleichanteil als Wechselspannungmesssignal an einem Ausgang S, an den insbesondere eine Spannungsmesseinrichtung, beispielsweise ein ADC-Wandler der Recheneinheit 5 aus Figur 1, angeschlossen werden kann, anliegt.

Zur Vorverarbeitung des Wechselspannungmesssignal ist ein zweites elektrisches Netzwerk N2 vorgesehen, das beispielsweise zur Filterung und/oder Verstärkung des Wechselspannungmesssignals dient. Weiterhin kann hier eine Impedanzanpassung der Licht-/Spannungs-Wandlerschaltung an eine angeschlossene Spannungsmesseinrichtung erfolgen.

Das zweite elektrische Netzwerk N2 kann Reihen- und/oder Parallelschaltungen von R-, L-, C-Elementen beinhalten. Schaltungen zur Impedanzanpassung in der HF-Technik ("Anpassstrukturen") sind bekannt, beispielsweise L-, T- und Pi-Anpassstrukturen. Von Schaltungen zur Impedanzanpassung können eine oder mehrere im Netzwerk N2 hintereinander in Reihe geschaltet sein, um das gewünschte Ergebnis zu erzielen.

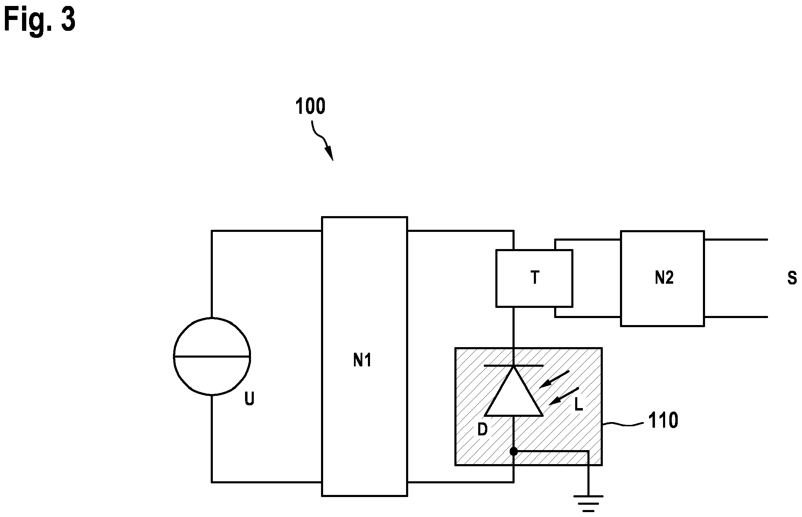

In Figur 3 ist die Licht-/Spannungs-Wandlerschaltung 100 aus Figur 2 erneut dargestellt, wobei die Photodiode D mit einer Elektrode, hier der Anode, sowohl mit elektrischer Masse als auch mit einem massiven metallischen Körper 110 verbunden ist. Der Körper 110 kann beispielsweise eine Kupferplatte sein, die insbesondere aus Korrosionsschutzgründen und/oder zum einfacheren Auflöten der Fotodiode verzinnt sein kann. Die Kupferplatte 110 dient als Wärmesenke zum Abführen des durch die Lichtbestrahlung hervorgerufenen Wärmeeintrags sowie als Abschirmung vor elektrischen bzw. elektromagnetischen Störungen. Der Körper kann eine Aussparung, z.B. quader- oder zylinderförmig, aufweisen, in welcher die Photodiode angeordnet ist.

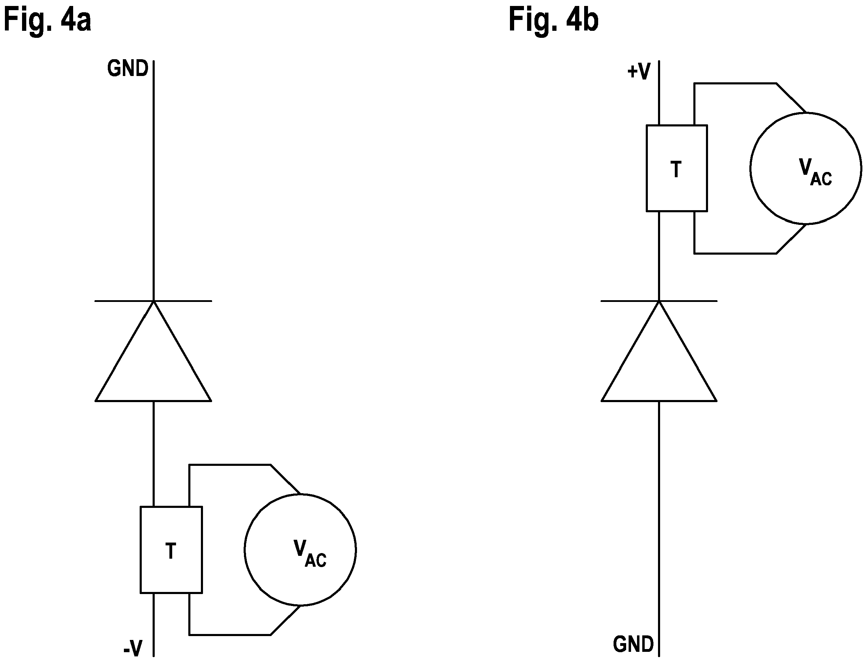

Die soeben beschriebene Beschaltung der Photodiode D, bei welcher die Anode mit elektrischer Masse und ggf. mit dem Metallkörper 110 verbunden ist, ist in Figur 4b noch einmal skizziert, wohingegen eine alternativ bevorzugte Ausführungsform, bei der die Kathode der Photodiode D mit elektrischer Masse und ggf. mit dem Metallkörper 110 verbunden ist, in Figur 4a skizziert ist. In diesem Fall (4a) befindet sich die Primärwicklung des Transformators T zwischen der Anode der Photodiode D und negativer Versorgungsspannung.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken. Insbesondere könnten die oben beschriebenen Ausführungsbeispiele - soweit möglich - miteinander kombiniert werden.

## Patentansprüche

1. Licht-/Spannungs-Wandlerschaltung (100) zur Wandlung von hochfrequenten Intensitätsschwankungen von Licht (L) in ein Wechselspannungmessssignal, mit
einer Photodiode (D) zum Erfassen des Lichts (L),
einem Transformator (T) mit einer Primärwicklung (T1) und einer Sekundärwicklung (T2), wobei die Primärwicklung (T1) des Transformators (T) mit der Photodiode (D) in Reihe geschaltet ist und wobei das Wechselspannungmessssignal an der Sekundärwicklung (T2) anliegt,
einer Spannungsquelle (U), die parallel zu der Reihenschaltung aus der Primärwicklung (T1) des Transformators (T) und der Photodiode (D) geschaltet ist, zum Betreiben der Photodiode in einer Sperrrichtung, und
einem gleichstromsperrenden und wechselstromleitenden elektrischen Netzwerk (N1), das parallel zu der Reihenschaltung aus der Primärwicklung (T1) des Transformators (T) und der Photodiode (D) geschaltet ist.

2. Licht-/Spannungs-Wandlerschaltung nach Anspruch 1, mit einem zweiten elektrischen Netzwerk (N2), das mit der Sekundärwicklung (T2) des Transformators (T) elektrisch leitend verbunden ist.

3. . Licht-/Spannungs-Wandlerschaltung (100) nach einem der vorstehenden Ansprüche, wobei eine Elektrode der Photodiode (D) elektrisch auf Masse liegt.

4. Licht-/Spannungs-Wandlerschaltung (100) nach Anspruch 3, wobei die elektrisch auf Masse liegende Elektrode der Photodiode (D) mit einem metallischen Körper (110) verbunden, insbesondere verlötet ist.

5. Licht-/Spannungs-Wandlerschaltung (100) nach Anspruch 4, wobei die Masse des metallischen Körpers wenigstens das 10fache der Masse der Photodiode (D) beträgt.

6. Licht-/Spannungs-Wandlerschaltung (100) nach Anspruch 4 oder 5, wobei der metallische Körper (110) als Zuleitung, Blech, Platte oder Block ausgebildet ist, und/oder wobei der metallische Körper (110) ganz oder teilweise aus Kupfer und/oder Aluminium und/oder Eisen ausgebildet.

7. Licht-/Spannungs-Wandlerschaltung (100) nach einem der Ansprüche 4 bis 6, wobei die Photodiode (D) in einer Ausnehmung des metallischen Körpers (110) angeordnet ist.

8. Licht-/Spannungs-Wandlerschaltung (100) nach einem der vorstehenden Ansprüche, mit einem Messspannungsausgang (S) zur Ausgabe des Wechselspannungmessssignals, der parallel zu der Sekundärwicklung (T2) des Transformators (T) geschaltet ist.

9. Mikroskop (1) mit einer Licht-/Spannungs-Wandlerschaltung (100) nach einem der vorstehenden Ansprüche.

## Claims

1. Light/voltage converter circuit (100) for converting high-frequency intensity fluctuations of light (L) into an AC voltage measurement signal, comprising
a photodiode (D) for detecting the light (L),
a transformer (T) comprising a primary winding (T1) and a secondary winding(T2), wherein the primary winding (T1) of the transformer (T) is connected in series with the photodiode (D) and wherein the AC voltage measurement signal is present on the secondary winding (T2),
a voltage source (U), connected in parallel with the series circuit formed by the primary winding (T1) of the transformer (T) and the photodiode (D), for operating the photodiode in a reverse direction, and
a DC current-blocking and AC current-conducting electrical network (N1) connected in parallel with the series circuit formed by the primary winding (T1) of the transformer (T) and the photodiode (D).

2. Light/voltage converter circuit according to Claim 1, comprising a second electrical network (N2), which is electrically conductively connected to the secondary winding (T2) of the transformer (T).

3. Light/voltage converter circuit (100) according to either of the preceding claims, wherein one electrode of the photodiode (D) is electrically grounded.

4. Light/voltage converter circuit (100) according to Claim 3, wherein the electrically grounded electrode of the photodiode (D) is connected, in particular soldered, to a metallic body (110).

5. Light/voltage converter circuit (100) according to Claim 4, wherein the mass of the metallic body is at least ten times the mass of the photodiode (D).

6. Light/voltage converter circuit (100) according to Claim 4 or 5, wherein the metallic body (110) is embodied as a supply line, metal sheet, plate or block, and/or wherein the metallic body (110) is formed wholly or partly from copper and/or aluminium and/or iron.

7. Light/voltage converter circuit (100) according to any of Claims 4 to 6, wherein the photodiode (D) is arranged in a cutout of the metallic body (110).

8. Light/voltage converter circuit (100) according to any of the preceding claims, comprising a measurement voltage output (S) for outputting the AC voltage measurement signal, said measurement voltage output being connected in parallel with the secondary winding (T2) of the transformer (T).

9. Microscope (1) comprising a light/voltage converter circuit (100) according to any of the preceding claims.

## Revendications

1. Circuit de conversion lumière/tension (100) permettant de convertir des variations d'intensité haute fréquence de la lumière (L) en un signal de mesure de tension alternative, comprenant
une photodiode (D) servant à détecter la lumière (L),
un transformateur (T) pourvu d'un enroulement primaire (T1) et d'un enroulement secondaire (T2), l'enroulement primaire (T1) du transformateur (T) étant monté en série avec la photodiode (D), et le signal de mesure de tension alternative étant appliqué à l'enroulement secondaire (T2),
une source de tension (U) qui est montée en parallèle avec le montage en série composé de l'enroulement primaire (T1) du transformateur (T) et de la photodiode (D) et servant à faire fonctionner la photodiode dans un sens de blocage, et
un réseau (N1) bloquant le courant continu et laissant passer le courant alternatif, qui est monté en parallèle avec le montage en série composé de l'enroulement primaire (T1) du transformateur (T) et de la photodiode (D).

2. Circuit de conversion lumière/tension selon la revendication 1, comprenant un deuxième réseau électrique (N2) qui est relié de manière électriquement conductrice à l'enroulement secondaire (T2) du transformateur (T).

3. Circuit de conversion lumière/tension (100) selon l'une quelconque des revendications précédentes, dans lequel une électrode de la photodiode (D) est électriquement mise à la masse.

4. Circuit de conversion lumière/tension (100) selon la revendication 3, dans lequel l'électrode, électriquement mise à la masse, de la photodiode (D) est reliée, en particulier soudée, à un corps métallique (110).

5. Circuit de conversion lumière/tension (100) selon la revendication 4, dans lequel la masse du corps métallique est au moins dix fois la masse de la photodiode (D).

6. Circuit de conversion lumière/tension (100) selon la revendication 4 ou 5, dans lequel le corps métallique (110) est réalisé sous forme de conducteur d'amenée, de tôle, de plaque ou de bloc, et/ou dans lequel le corps métallique (110) est réalisé entièrement ou partiellement en cuivre et/ou en aluminium et/ou en fer.

7. Circuit de conversion lumière/tension (100) selon l'une quelconque des revendications 4 à 6, dans lequel la photodiode (D) est disposée dans un évidement du corps métallique (110).

8. Circuit de conversion lumière/tension (100) selon l'une quelconque des revendications précédentes, comprenant une sortie de tension de mesure (S) servant à sortir le signal de mesure de tension alternative qui est monté en parallèle avec l'enroulement secondaire (T2) du transformateur (T).

9. Microscope (1), comprenant un circuit de conversion lumière/tension (100) selon l'une quelconque des revendications précédentes.
